# EUROPEAN PATENT SPECIFICATION

(11) **EP 2 587 950 B1**
(45) Date of publication and mention of the grant of the patent: **25.02.2015**
(21) Application number: 11735593.3
(22) Date of filing: 28.06.2011
(51) Int. Cl.: A24D 3/02

(54) **FILTER FOR A SMOKING ARTICLE**
FILTER FÜR RAUCHARTIKEL
FILTRE POUR ARTICLE POUR FUMEUR

(30) Priority: 30.06.2010 EP 10251191
(43) Date of publication of application: 08.05.2013
(73) Proprietor: Philip Morris Products S.A., 2000 Neuchâtel (CH)
(72) Inventor: BESSO, Clement, 2000 Neuchatel (CH); KUERSTEINER, Charles, 1008 Jouxtens-Mezery (CH)
(74) Representative: Taylor, Gillian Claire
(86) International application number: PCT/EP2011/003169
(87) International publication number: WO 2012/000646

(56) References cited:
- WO-A1-2008/150130
- WO-A1-2009/098462
- US-A- 3 550 508
- US-A- 4 185 645
- US-A- 4 541 826
- US-A1- 2003 159 703
- US-A1- 2006 135 335

## Description

The present invention relates to a flavour granule for use in a smoking article, a filter for a smoking article and a smoking article comprising such a filter.

Filter cigarettes typically comprise a rod of tobacco cut filler surrounded by a paper wrapper and a cylindrical filter aligned in end-to-end relationship with the wrapped tobacco rod and attached thereto by tipping paper. In conventional filter cigarettes, the filter usually consists of a plug of cellulose acetate tow wrapped in porous plug wrap. Filter cigarettes with multi-component filters that comprise two or more segments of filtration material for the removal of particulate and gaseous components of the mainstream smoke are also known.

To enhance the flavour of the mainstream smoke, it is known to provide filter cigarettes with filters that include flavourants. For example, US-A-2003/0159703 discloses a cigarette filter including flavoured carbon particles which are formed by applying a liquid flavourant onto activated carbon particles so that the flavourant may be adsorbed or absorbed by the activated carbon. It has also been proposed to include flavourants in the form of plant material, such as leaves, seeds or roots, from one or more aromatic plants.

It would be desirable to provide means for releasing flavour for a smoking article that, in use, provides improved flavour enhancement, and in particular improved mint and menthol flavour delivery, to a consumer. Furthermore, it would be desirable to provide means for releasing flavour for a smoking article that minimises loss of flavour prior to smoking, for example during storage of the smoking article.

According to the present invention there is provided a flavour granule suitable for use in a smoking article, the flavour granule comprising a porous support material, a liquid flavourant, particles of plant material and at least one binder. The present invention also provides a smoking article comprising a plurality of flavour granules according to the invention. The flavour granules may be incorporated into a rod of smokable material, a filter or any other suitable portion or component of the smoking article.

According to the present invention there is also provided a filter for a smoking article comprising a flavour release segment including a plurality of flavour granules, wherein the flavour granules comprise a porous support material, a liquid flavourant, particles of plant material and at least one binder.

According to the present invention there is also provided a smoking article comprising a wrapped rod of smokable material and a filter according to the present invention attached to the rod of smokable material, preferably by tipping paper. Preferably, the smoking article is a filter cigarette.

Flavour granules and filters according to the present invention may advantageously be used in filter cigarettes and other smoking articles in which tobacco material or another combustible material is combusted to form smoke. Flavour granules and filters according to the present invention may also be used in smoking articles in which material is heated to form an aerosol, rather than combusted. In one type of heated smoking article, tobacco material or another aerosol forming material is heated by one or more electrical heating elements to produce an aerosol. In another type of heated smoking article, an aerosol is produced by the transfer of heat from a combustible or chemical heat source to a physically separate aerosol forming material, which may be located within, around or downstream of the heat source.

As used herein, the term 'smoke' is used to describe smoke produced by combustible smoking articles, such as filter cigarettes, and aerosols produced by non-combustible smoking articles, such as heated smoking articles of the types described above.

The flavour granules of the present invention are discrete, solid granules formed of an agglomerate of a porous support material, a liquid flavourant, particles of plant material and at least one binder.

When incorporated into a smoking article, both the liquid flavourant and the plant material in the flavour granules release flavour during smoking thereby altering the flavour characteristics of the smoke. Advantageously, the composition of the flavour granules can be varied in order to tailor the flavour profile of the smoking article into which the flavour granules are incorporated. For example, the liquid flavourant and the plant material can be selected such that each releases flavour at a different time during smoking. Alternatively or in addition, the liquid flavourant and the plant material can be varied to alter the type of flavour or flavours released during smoking.

As used herein, the term "porous support material" is used to denote a porous material that is capable of retaining a liquid flavourant within the pores of its structure, either by adsorption, absorption, or both adsorption and absorption. The flavour granules of the present invention comprise a porous support material loaded with a liquid flavourant.

The inclusion of a porous support material and a liquid flavourant in flavour granules according to the present invention is advantageous since the liquid flavourant can be effectively trapped within the pores of the porous support material, thereby preventing or reducing loss of the liquid flavourant prior to smoking, for example by volatilisation. This, together with the other components of the flavour granules of the present invention, advantageously enables a larger volume of the liquid flavourant to be provided in a smoking article, resulting in increased flavour delivery during smoking.

As described further below, the inclusion of particles of plant material in the flavour granules of the present invention also improves retention of the liquid flavourant within the pores of the porous support material.

Flavour granules according to the present invention preferably comprise a particulate porous support material. Preferably, the porous support material is ground before being incorporated into the flavour granules in order to achieve a consistent particle size.

Preferably, the flavour granules comprise between about 10% and about 40% by weight porous support material, more preferably between about 15% and about 35% by weight porous support material and most preferably between about 20% and about 30% by weight porous support material (based on the weight of the final flavour granules). As used herein, the term "final flavour granules" is used to refer to the flavour granules after formation and drying thereof.

Preferably, the density of the porous support material is between about 0.2 g/cm³ (grams per cubic centimetre) and about 0.8 g/cm³, more preferably between about 0.3 g/cm³ and about 0.5 g/cm³. Preferably, the BET surface area of the porous support material is between about 800 m²/g (square metres per gram) and about 3000 m²/g, more preferably between about 1000 m²/g and about 1300 m²/g.

Preferably, the porous support material is an inorganic porous material, more preferably an inorganic porous adsorbent material. Preferred porous support materials for use in flavour granules according to the present invention include, but are not limited to, activated carbon, polymeric resin, silica, clay and zeolites, for example zeolites having a high silica/alumina ratio.

The use of activated carbon as the porous support material in flavour granules according to the present invention is particularly preferred. This is because the activated carbon advantageously initially acts as a reservoir for the liquid flavourant and then, once the liquid flavourant has been released, may also act as an adsorbent to reduce certain gaseous smoke constituents.

As used herein, the term "liquid flavourant" is used to denote a liquid substance that provides flavour to the smoke produced by a smoking article during smoking. The liquid flavourant is trapped within the pores of the porous support material and retained therein until smoking. The heat generated during smoking causes the volatilisation of the liquid flavourant and the resultant volatilised flavour compounds are released from the porous support material into the smoke. The flavours released by the volatilisation of the liquid flavourant enhance the flavours released from the particles of plant material in the flavour granules of the present invention to provide increased flavour delivery during smoking.

Preferably, the flavour granules comprise at least about 10% by weight liquid flavourant, more preferably at least about 15% by weight liquid flavourant and most preferably at least about 20% by weight liquid flavourant (based on the weight of the final flavour granules). Preferably, the flavour granules comprise up to about 30% by weight liquid flavourant, more preferably up to about 40% by weight liquid flavourant.

Particularly preferably, the flavour granules comprise between about 10% and about 40% by weight liquid flavourant, more preferably between 15% and 30% by weight liquid flavourant and most preferably between about 20% and about 30% by weight liquid flavourant.

The amount of porous support material in flavour granules according to the present invention may be adjusted depending on the amount of liquid flavourant incorporated therein, so that all of the liquid flavourant can be retained within the pores of the porous support material.

Suitable liquid flavourants for use in the flavour granules of the present invention are well known to the skilled person. The liquid flavourant may include one or more natural flavourants, one or more synthetic flavourants, or a combination of natural and synthetic flavourants.

The liquid flavourant may comprise a liquid flavour extract or may comprise a solid flavour extract dissolved in a suitable liquid solvent. Where a suitable liquid solvent is used, some of this liquid solvent may be removed from the flavour granules after formation thereof, for example during a drying step.

Suitable flavours to be provided by the liquid flavourant include, but are not limited to, natural or synthetic menthol, peppermint, spearmint, coffee, tea, spices (such as cinnamon, clove and ginger), cocoa, vanilla, fruit flavours, chocolate, eucalyptus, geranium and linalool.

Preferably, the liquid flavourant includes an essential oil, or a mixture of one or more essential oils. An "essential oil" is a volatile oil having the characteristic odour and flavour of the plant from which it is obtained. Suitable essential oils for inclusion in the flavour granules of the present invention include, but are not limited to, peppermint oil and spearmint oil.

The one or more essential oils may be provided in a solution of, for example, ethanol.

Where the liquid flavourant comprises an essential oil, the essential oil may be obtained from the same type of plant as the particles of plant material in the flavour granules, so that the flavours released from the liquid flavourant and plant material during smoking enhance each other. Alternatively, the essential oil may be obtained from a different type of plant than the particles of plant material in the flavour granules, so that multiple flavours are released from the flavour granules during smoking.

As used herein, the term "plant material" is used to denote a material consisting of one or more parts of a plant. The plant material is ground or otherwise reduced in size to provide a particulate material.

Preferably, the flavour granules in the flavour release segment comprise between 15% and 35% by weight plant material, more preferably between 20% and 30% by weight plant material (based on the weight of the final flavour granules).

The flavour granules may include particles of any plant material that is capable of releasing flavour into smoke produced by a smoking article. Preferably, the plant material is non-tobacco plant material, so that the flavour granules enrich the smoke with non-tobacco flavour. The flavour granules may comprise particles formed from any suitable part of a plant, including but not limited to the leaves, stem, root, flower and fruit. The flavour granules may include plant material from one or more plants.

Preferably, the flavour granules comprise particles of plant leaf. More preferably, the flavour granules comprise particles of non-tobacco plant leaf. In preferred embodiments of the present invention, the flavour released from the plant leaf is provided by volatile compounds, such as oils, contained therein. Prior to smoking, the volatile compounds tend to remain trapped within the plant leaf, but are volatilised during smoking, thereby enriching the smoke with flavour. The flavours released from the plant leaf enhance and complement the flavours released from the liquid flavourant loaded into the porous support material, thereby increasing the overall flavour delivery during smoking. The flavour characteristics of the smoke can therefore be altered depending on the plant leaf selected for inclusion in the flavour granules.

In particularly preferred embodiments of the present invention, the particles of plant material comprise herbaceous material, such as herb leaf.

The terms "herbaceous material" and "herb leaf" are used to denote material and leaf, respectively, from an herbaceous plant. An "herbaceous plant" is an aromatic plant, the leaves or other parts of which are used for medicinal, culinary or aromatic purposes and are capable of releasing flavour into smoke produced by a smoking article. The flavour granules of the present invention may comprise herbaceous material from one or more perennial or annual herbaceous plants. For example, the flavour granules may comprise herb leaf or other herbaceous material from herbaceous plants including, but not limited to, mints, such as peppermint and spearmint, lemon balm, basil, cinnamon, lemon basil, chive, coriander, lavender, sage, tea, thyme and carvi. The term "mints" is used to refer to plants of the genus *Mentha.*

In particularly preferred embodiments of the present invention, the flavour granules comprise particles of mint leaf, more preferably particles of peppermint leaf. Suitable types of mint leaf may be taken from plant varieties including but not limited to *Mentha piperita, Mentha arvensis, Mentha niliaca, Mentha citrata, Mentha spicata, Mentha spicata crispa, Mentha cordifolia, Mentha longifolia, Mentha pulegium, Mentha suaveolens, and Mentha suaveolens variegata.*

Preferably, the oil content of the mint leaf is at least about 0.6% by weight. The inclusion of particles of mint leaf in flavour granules of according to the present invention advantageously provides an improved way of imparting mint and menthol flavours to the smoke of a smoking article. Smoking articles according to the present invention with filters comprising flavour granules comprising particles of peppermint leaf advantageously provide enhanced mint and menthol flavours compared to conventional menthol cigarettes.

The term "mint flavour" is used to refer to the flavour or the flavour extract present in mint plants, such as a peppermint plant and spearmint. The term "menthol" is used to refer to a specific flavour component present in peppermint oil and other mint oils. Menthol can be extracted from peppermint and other mint oils or made synthetically and if desired, can be used as the liquid flavourant in the flavour granules of the present invention, as set out above.

Preferably, the plant material in the flavour granules is ground in order to provide a particulate material suitable for agglomeration with the other components of the flavour granules. However, in certain embodiments a suitable particle size may be achieved by shredding or cutting the plant material. Preferably, the particles of plant material have an average particle size of less than about 600 microns (µm), more preferably of less than about 400 microns (µm) and most preferably of less than about 300 microns (µm). Preferably, the particles of plant material have an average particle size of greater than about 25 microns (µm) and more preferably of greater than about 65 microns (µm). Particularly preferably, the particles of plant material have an average particle size between about 25 microns (µm) and about 600 microns (µm), more preferably between about 65 microns (µm) and about 300 microns (µm).

Preferably, the plant material, such as plant leaf, is dried to a moisture content of between about 6% and about 15% by weight, more preferably of between about 8% and about 12% by weight and most preferably of between about 8% and about 10%.

The particles of plant material may act as a barrier around the porous support material loaded with liquid flavourant. This advantageously ensures a minimum loss of liquid flavourant from the porous support material during storage of filters and smoking articles according to the present invention, and may also allow for the porous support material to be initially loaded with more liquid flavourant. This in turn maximises the flavour release from the flavour granules of the present invention into the smoke during smoking.

With certain combinations of liquid flavourant and plant material, the flavour from the liquid flavourant may be released into the smoke at a different time after the commencement of smoking than the flavour released from the plant material. This may advantageously provide relatively consistent levels of flavour delivery during smoking and allows the flavour profile of smoking articles according to the present invention to be tailored or adjusted. For example, flavour may be released into the smoke firstly from the particles of plant material and then secondly from the liquid flavourant.

In a particularly preferred embodiment of the present invention, the flavour granules comprise a combination of particles of peppermint leaf and menthol as the liquid flavourant. As described above, menthol is one of the major components of peppermint oil and can be made synthetically or extracted from peppermint oil using known extraction techniques. In this particularly preferred embodiment, the mint and menthol flavours enhance and complement each other and the flavour granules provide an increased and sustained delivery of flavour to the smoker during smoking.

The flavour granules of the invention comprise at least one binder. The binder helps to hold the components of the flavour granule together and may also be used to adjust the viscosity or flow properties of the agglomerate during formation of the flavour granules. Suitable binders for use in the flavour granules of the present invention are well known to the skilled person.

The flavour granules may include an organic binder, such as for example carboxymethylcellulose, microcrystalline cellulose or polyvinylacetate, polyethylene glycol, polyethylene oxide, gelatine, starch, sugar, hydroxylethyl/methyl cellulose.

Alternatively, or in addition, the flavour granules may include an inorganic binder, such as for example water. Preferably, water is included as a binder during formation of the flavour granules.

It will be appreciated that flavour granules according to the present invention may include a combination or one or more organic binders and one or more inorganic binders. It will also be appreciated that flavour granules according to the invention may include one or more solid binders or one or more liquid binders or a combination of one or more solid binders and one or more liquid binders.

Some of the binder included during formation of the flavour granules may be removed from the flavour granules once they have been formed. For example, where water is included as an inorganic liquid binder during formation of the flavour granules, a large proportion of the water may be removed by drying the flavour granules subsequent to the formation thereof.

Preferably, the final flavour granules have a total binder content of between about 15% and about 35% by weight total binder, more preferably between about 20% and about 30% by weight and most preferably between about 22.5% and about 27.5% by weight (based on the weight of the final flavour granules).

The flavour granules may be formed into any suitable shape, but are preferably substantially cylindrical or spherical. The average diameter of the flavour granules is preferably between about 0.1 mm and about 2.5 mm, more preferably between about 0.3 mm and about 1.0 mm, even more preferably between about 0.5 mm and about 0.6 mm. Preferably, the particle size distribution of the flavour granules is minimised. The particle size distribution may depend upon, amongst other things, the weight ratio of solids to liquid binder (for example, water) used in the granule formation process. Preferably, the amount of liquid binder used in the granule formation process is approximately equal to the amount of solids used therein, or there is slightly more liquid binder than solids.

Optionally, the flavour granules may further comprise a coating. A preferred coating may be formed from low molecular weight chitosan solution (0.5 to 1.0%). It has been found that the provision of a coating on the outer surface of the flavour granules advantageously results in a significant reduction in migration and volatilisation of volatile flavours from the liquid flavourant and particles of plant material in the flavour granules prior to smoking. The provision of a coating further enhances the effect of trapping the liquid flavourant within the pores of the porous support material such that the undesired premature release of flavour from the flavour granules can be minimised.

Flavour granules according to the present invention may be produced using known extrusion, spheronisation or high shear granulation processes. Details of suitable extrusion and spheronisation techniques can be found, for example, in "Extrusion-Spheronisation - A Literature Review" by Chris Vervaet et al, 1995 International Journal of Pharmaceutics 116:131-146.

If desired, additional reagents may be incorporated into the mixture for forming the flavour granules in order to aid the extrusion, spheronisation or granulation process, for example, by preventing or minimising separation of the liquid from the solid or by improving flow properties of the mixture. Suitable extrusion, spheronisation and granulation aiding reagents are well known to the skilled person.

Once formed, the flavour granules will typically need to undergo a drying step in order to at least partially remove one or more solvents or binders present therein.

If it is desired to further increase the flavour loading of the flavour granules, further liquid flavourant may be incorporated into or onto the flavour granules after drying thereof.

Where a coating is provided on the flavour granules, this may be applied to the granules obtained from the extrusion, spheronisation or granulation process after drying thereof using any suitable apparatus such as for example a fluidised bed sprayer. Suitable fluidised bed sprayers are available from Glatt GmbH, Germany.

Flavour granules according to the present invention may advantageously be incorporated into a wide variety of different types of smoking article. For example, the flavour granules may be incorporated into combustible smoking articles, such as filter cigarettes, having a rod of tobacco cut filler or other smokable material, which is combusted during smoking. Alternatively, the flavour granules may be incorporated into heated smoking articles of the type described above in which material is heated to form an aerosol, rather than combusted. For example, flavour granules according to the present invention may be incorporated into a heated smoking article comprising a combustible heat source, such as that disclosed in WO-A-2009/022232, which comprises a combustible heat source and an aerosol-generating substrate downstream of the combustible heat source. Flavour granules according to the present invention may also be incorporated into heated smoking articles comprising non-combustible heat sources, for example, chemical heat sources or electrical heat sources such as electrical resistive heating elements.

Flavour granules according to the present invention may be incorporated into any suitable portion or component of a smoking article. For example, the flavour granules may be incorporated into a rod of smokable material or filter of a combustible smoking article, such as a filter cigarette, or may incorporated into an aerosol-generating substrate or filter of a heated smoking article. It will be appreciated that flavour granules according to the present invention may be incorporated into more than one portion or component of a smoking article.

Smoking articles according to the present invention comprising a plurality of flavour granules may comprise any number of flavour granules that is suitable to provide flavour enhancement to the smoke thereof during smoking. For example, smoking articles according to the invention may comprise between about 2 and about 30,000 flavour granules, for example between about 2 and 20,000 flavour granules.

Filters according to the present invention comprising a flavour release segment including a plurality of flavour granules may be single segment filters, consisting of the flavour release segment only. Alternatively, filters according to the invention may be multi-component filters comprising two or segments. For example, filters according to the present invention may be multi-component filters further comprising at least one of: a rod end segment upstream of the flavour release segment and a mouth end segment downstream of the flavour release segment.

Throughout the specification, the terms "upstream" and "downstream" are used to describe the relative positions of segments of filters according to the present invention in relation to the direction of the smoke drawn through the filters during use. For example, where the flavour release segment is upstream of a mouth end segment, the smoke is drawn first through the flavour release segment and then through the mouth end segment.

Filters according to the present invention may comprise flavour release segments including any number of flavour granules that is suitable to provide flavour enhancement to smoke drawn through the filter during smoking. For example, filters according to the invention may comprise flavour release segments including between about 2 and about 25,000 flavour granules, for example between about 2 and 15,000 flavour granules.

The mouth end segment of multi-component filters according to the present invention may, in some embodiments, advantageously prevent flavour granules in the flavour release segment, or portions thereof, from reaching the mouth of a smoker during smoking.

Preferably, the mouth end segment comprises filtration material. More preferably, the mouth end segment comprises filtration material that has substantially no particulate phase filtration efficiency or very low particulate phase filtration efficiency. The mouth end segment may, for example, comprise cellulosic material, such as cellulose acetate tow, or other suitable fibrous filtration material of low filtration efficiency. Where the mouth end segment is formed of fibrous filtration material, the fibres therein may extend along substantially the entire length of the mouth end segment and be substantially aligned in the longitudinal direction of the filter. Alternatively, the fibres may extend part way along the length of the plug and be randomly oriented relative to the longitudinal axis of the filter.

Where the mouth end segment comprises filtration material, the length of the mouth end segment is preferably between about 3 mm and about 12 mm, more preferably between about 6 mm and about 8 mm.

Filters according to the present invention may comprise a mouth end cavity downstream of the flavour release segment. For example, in certain embodiments, multi-component filters according to the present invention may further comprise a mouth end cavity downstream of the mouth end segment described above. The mouth end cavity may be formed by, for example, tipping paper circumscribing the filter.

The rod end segment of multi-component filters according to the invention preferably comprises fibrous filtration material. The rod end segment may, for example, comprise cellulosic material, such as cellulose acetate tow, or other suitable fibrous filtration materials such as paper. Where the rod end segment is formed of fibrous filtration material, the fibres therein may extend along substantially the entire length of the rod end segment and be substantially aligned in the longitudinal direction of the filter. Alternatively, the fibres may extend part way along the length of the plug and be randomly oriented relative to the longitudinal axis of the filter. The inclusion of a rod end segment comprising filtration material advantageously provides additional filtration efficiency.

Alternatively or in addition, the rod end segment may comprise at least one sorbent capable of removing at least one gas phase constituent from mainstream smoke drawn through the filter. Preferably, the at least one sorbent is selected from the group consisting of activated carbon, activated alumina, zeolites, sepiolites, molecular sieves and silica gel.

At least one of the mouth end segment and the rod end segment may include one or more flavourants, preferably one or more liquid flavourants, to further enhance flavour delivery to the smoker during smoking. Where the mouth end segment and the rod end segment both comprise at least one flavourant, the at least one flavourant in the mouth end segment may be the same as or different to the at least one flavourant in the rod end segment. Furthermore, the liquid flavourants in the mouth end segment and the rod end segment may be the same as or different to the liquid flavourant in the flavour granules in the flavour release segment of the filter.

For example, at least one of the mouth end segment and the rod end segment may comprise a plug of filtration material including one or more threads impregnated with liquid flavourant. The one or more threads may be made from cellulose acetate yarn, rayon, cotton, paper, or any other hydrophilic textile or non-textile material capable of absorbing or adsorbing the liquid flavourant. The threads may be coloured, for example, to indicate the type of flavourant impregnated therein. If more than one thread is provided, the threads may be the same or different colours and may be impregnated with the same or different liquid flavourants. Preferably, the threads are between about 0.6 mm and about 2.0 mm in diameter, more preferably about 0.8 mm in diameter. Filter plugs comprising flavourant bearing threads suitable for use in multi-component filters according to the present invention, and methods and apparatuses for producing such plugs, are described in US Patents Nos. 4,281,671 and 7,074,170 and are available from the American Filtrona Company, Richmond, Virginia, USA.

Alternatively or in addition, at least one of the mouth end segment and the rod end segment may include a plurality of beads impregnated with liquid flavourant. The beads may be formed from, for example, a cellulosic material bonded with a polyvinyl acetate binder, or from tobacco powder bonded with microcrystalline cellulose. Beads suitable for use in multi-component filters according to the present invention are manufactured and sold under the brand Viscopearls® by Rengo Co. Ltd., Japan. Methods and apparatuses for producing such beads are also described in Japanese Patent Application No. 10182842. The beads may be of the same or different diameters and colours. The colour of the beads may, for example, indicate the type of flavourant with which they are impregnated. Preferably, the beads are between about 0.2 mm and about 2 mm in diameter.

Liquid flavourants for use in the mouth end and rod end segments of multi-component filters according to the present invention may include one or more natural flavourants, synthetic flavourants, or a combination of natural and synthetic flavourants. Suitable flavours to be provided by liquid flavourants in the mouth end and rod end segments of multi-component filters according to the present invention include, but are not limited to, those previously described above for the liquid flavourant in the flavour granules thereof.

In preferred embodiments of the present invention in which the flavour granules comprise particles of peppermint leaf and menthol as the liquid flavourant, at least one of the mouth end segment and the rod end segment of the multi-component filter preferably comprises a liquid natural or synthetic menthol flavourant. In such embodiments, the provision of a menthol flavourant in the rod end segment advantageously further enhances the flavour released into smoke drawn through the filter during smoking and complements the menthol and mint flavours released downstream into the smoke by the particles of peppermint leaf and menthol in the flavour granules located in the flavour release segment.

Multi-component filters according to the present invention may further comprise a second flavour release segment to provide further flavour enhancement to the smoker during smoking. The second flavour release segment may include a plurality of flavour granules according to the invention. Alternatively or in addition, the second flavour release segment may include tobacco leaf or non-tobacco plant leaf, or one or more liquid flavourants in any of the forms described above in relation to the mouth end segment and the rod end segment. The second flavour release segment may be provided upstream or downstream of the first flavour release segment.

Multi-component filters according to the present invention may be produced by forming separate continuous rods comprising multiple units of each individual segment of the multi-component filter and then combining these separate rods in a known manner in one or more stages to form a continuous filter rod comprising multiple units of the multi-component filter. The continuous filter rod may then be subsequently severed at regular intervals by a cutting mechanism to yield a succession of discrete multi-component filters according to the invention.

In a first aspect of the present invention, the plurality of flavour granules in the flavour release segment of the filter is distributed in a plug of fibrous filtration material, such as cellulose acetate tow or paper. Preferably, the flavour granules are substantially evenly distributed along the length of the plug of fibrous filtration material.

The fibres in the fibrous filtration material may be substantially aligned in the longitudinal direction of the filter and extend along substantially the entire length of the plug of fibrous filtration material. Alternatively, the fibres in the fibrous filtration material may be randomly oriented and extend part way along the length of the plug of fibrous filtration material. Optionally, a filter plasticiser may be applied to the fibrous filtration material in a conventional manner, by spraying it onto the separated fibres. Preferably, the filter plasticiser is applied to the fibrous filtration material before the flavour granules are distributed therein.

In smoking articles according to the first aspect of the invention, the flavour segment is preferably between about 5 mm and about 22 mm in length, more preferably between about and 10 mm about 15 mm in length, most preferably about 12 mm in length.

Preferably, filters according to the first aspect of the present invention further comprise a mouth end segment downstream of the flavour release segment. A mouth end cavity may optionally be provided downstream of the mouth end segment. The mouth end cavity may be formed when the filter is attached to a rod of smokable material by, for example, tipping paper to form a smoking article according to the present invention. Where a mouth end cavity is provided downstream of the mouth end segment, the length of the mouth end segment is preferably between about 3 mm and about 4 mm.

In a second aspect of the present invention, the flavour release segment comprises a cavity at least partially filled with flavour granules. The cavity is provided between an upstream segment, for example any of the rod end segments described above, and a downstream segment, for example any of the mouth end segments described above. Preferably, between about 40% and about 100% of the volume of the cavity is filled with flavour granules, more preferably between about 60% and about 80% of the volume of the cavity. Cavity filters according to the second aspect of the invention may be produced using known machinery for producing charcoal filters, such as that described in EP-A-1,571,933. Such machinery is available from Filtrona International Ltd., Great Britain.

In filters according to the second aspect of the invention, the flavour release segment is preferably between about 2 mm and about 12 mm in length, more preferably between 3 mm and 8 mm and most preferably between 4 mm to 6 mm.

The loading of flavour granules in the flavour release segment is preferably between about 2 mg/mm and about 20 mg/mm for a filter having a diameter of between about 7.5 mm and about 7.85 mm, more preferably between about 5 mg/mm and about 16 mg/mm, most preferably between about 8 mg/mm and about 16 mg/mm. The normalised loading (mg per mm) will typically be higher where the flavour granules are provided in a cavity in accordance with the second aspect of the present invention than when the flavour granules are distributed through a plug of fibrous filtration material in accordance with the first aspect of the present invention. Preferably, the total loading of flavour granules within the flavour release segment is between about 20 mg and about 200 mg, more preferably between about 50 mg and about 180 mg and most preferably between about 75 mg and about 150 mg.

Combustible smoking articles according to the present invention preferably comprise a wrapped rod of tobacco cut filler or other smokable material and a filter according to the present invention including a flavour release segment comprising a plurality of flavour granules.

In certain embodiments, the wrapper used to wrap the tobacco rod may be coated with a solution of encapsulated flavours in beta-cyclodextrin, which odorises the mainstream smoke during smoking. A suitable example of such a coating is Emanate® (available from V. Mane Fils, France) which is a product consisting of a range of beta-cyclodextrin inclusion complexes such as Eugenol.

Preferably, smoking articles according to the present invention have a total nicotine free dry particulate matter (NFDPM) or "tar" delivery of up to about 10 mg, more preferably up to about 6 mg. The "tar" delivery may be as low as 1 mg, more preferably as low as 0.1 mg. Preferably, the "tar" delivery is between 0.1 mg and 10 mg, more preferably between 1 mg and 10 mg or 0.1 mg and 6 mg and most preferably between 1 mg and 6 mg.

Preferably, the overall length of smoking articles according to the present invention is between about 70 mm and about 128 mm, more preferably about 84 mm.

Preferably, the external diameter of filters and smoking articles according to the present invention is between about 5 mm and 8.5 mm, more preferably about 7.9 mm.

Preferably, the overall length of filters according to the present invention is between about 18 mm and about 36 mm, more preferably about 27 mm.

Where filters according to the invention are multi-component filters, the length of each individual segment of the filters is preferably between about 5 mm and about 22 mm.

Smoking articles according to the present invention may be packaged in containers, for example in soft packs or hinge-lid packs, with an inner liner coated with one or more flavourants.

The invention will be further described, by way of example only, with reference to the accompanying drawings, in which:
Figure 1 shows a side view of a filter cigarette comprising a single segment filter according to a first embodiment, of the first aspect of the present invention;
Figure 2 shows a side view of a filter cigarette comprising a multi-component filter according to a second embodiment of the first aspect of the present invention; and
Figure 3 shows a side view of a filter cigarette comprising a multi-component filter according to an embodiment of the second aspect of the present invention.

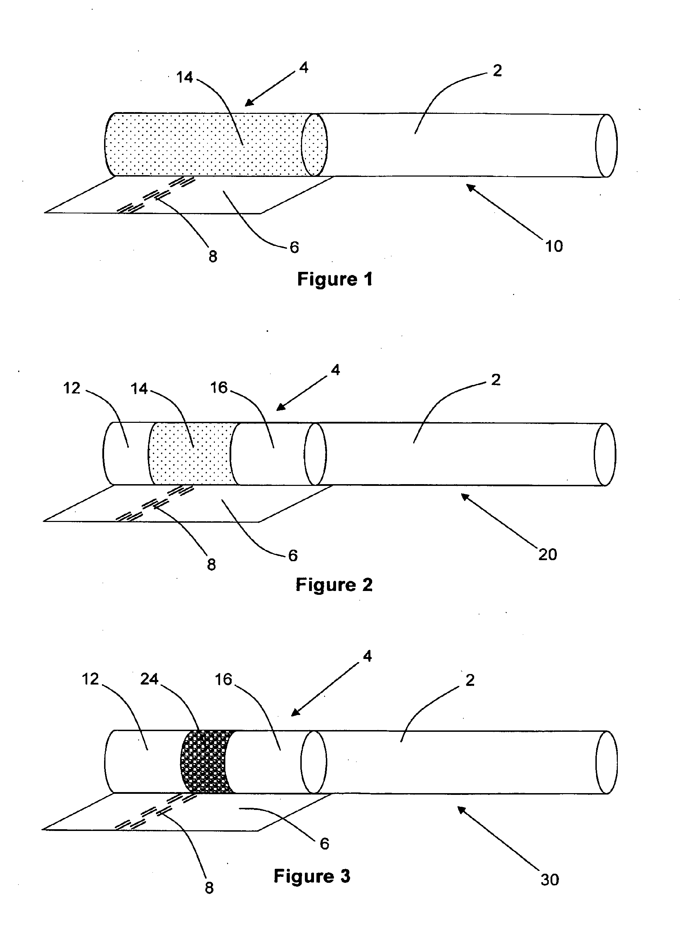

The filter cigarettes shown in Figures 1 to 3 have several components in common and these components have been given the same reference numerals. In each of the side views, portions have been broken away to illustrate interior details of the filter.

Each filter cigarette generally comprises an elongate, cylindrical wrapped tobacco rod 2 attached at one end to an axially aligned, elongate, cylindrical, filter 4. The wrapped tobacco rod 2 and the filter 4 are joined in a conventional manner by tipping paper 6, which circumscribes the entire length of the filter and an adjacent portion of the wrapped tobacco rod 2. To mix ambient air with mainstream smoke produced during combustion of the wrapped tobacco rod 4, a plurality of annular perforations 8 are provided through the tipping paper 6 at a location along the filter 4.

Each filter 4 includes a flavour release segment 14 comprising a plurality of flavour granules having a total weight of approximately 25 mg. The flavour granules are substantially spherical and have an average diameter of about 0.8 mm.

The flavour granules comprise 20-30% by weight of porous support material (ground activated carbon), 20-30% by weight of a liquid flavourant (solution of menthol in ethanol), 20-30% by weight of particles of plant material (ground peppermint leaf), 20-30% by weight of a solid organic binder and around 10% by weight of a liquid inorganic binder (water).

In order to produce the flavour granules, the porous support material is mixed with the liquid flavourant, forming a flavoured porous support material. The flavoured porous support is then mixed with the particles of plant material, the solid organic binder and the liquid inorganic binder to form a homogeneous paste, which is then extruded to form strands having an average diameter of 1 mm.

The strands are spheronised on a cylindrical plate to form spheres having an average diameter of 0.8 mm. The resultant spheres are dried to remove the majority of the liquid inorganic binder and solvent from the liquid flavourant. The weight ratio of solids to liquid binder (water) in the spheres prior to drying is around 1:1.06.

Once the spheres are dried, a coating of low molecular weight chitosan solution may be optionally applied to the outer surfaces of the final flavour granules in a fluidised bed sprayer.

An example of a suitable process for forming the flavour granules is set out below.

The filter 4 of the filter cigarette 10 according to the first embodiment of the invention shown in Figure 1 is a single segment filter consisting of a flavour release segment 14 adjacent to and abutting the wrapped tobacco rod 2. The flavour release segment 14 comprises a plug of cellulose acetate tow with a plurality of flavour granules substantially evenly distributed therein.

The filter cigarette 20 shown in Figure 2 has a multi-component filter 4 that includes three segments in abutting end-to-end relationship: a mouth end segment 12, distant from the tobacco rod 2; a flavour release segment 14 located upstream of the mouth end segment; and a rod end segment 16, located upstream of the flavour release segment 14 and adjacent to and abutting the wrapped tobacco rod 2.

The mouth end segment 12 comprises a plug of cellulose acetate tow of low filtration efficiency plasticised with glycerol triacetate. The flavour release segment 14 is of the same construction as that previously described above for the filter cigarette 10 shown in Figure 1.

The rod end segment 16 comprises a plug of cellulose acetate tow of medium to high filtration efficiency that, in use, partially filters out particulate phase components of the mainstream smoke.

In alternative embodiments of the present invention (not shown), at least one of the mouth end segment 12 and the rod end segment 16 of the multi-component filter 4 of the filter cigarette 20 shown in Figure 2 may further comprise at least one liquid flavourant. For example, one or both of the mouth end segment 12 and the rod end segment 16 may comprise one or more threads impregnated with a liquid flavourant or a plurality of beads impregnated with a liquid flavourant. Alternatively or in addition, at least one of the mouth end segment 12 and the rod end segment 16 of the multi-component filter 4 may comprise at least one sorbent capable of removing gas phase constituents from mainstream smoke drawn through the filter 4. The at least one sorbent may be, for example, activated carbon, activated alumina, zeolites or sepiolites provided on the cellulose acetate tow.

The filter cigarette 30 shown in Figure 3 has a multi-component filter 4 similar in construction to the multi-component filter 4 of the filter cigarette 20 shown in Figure 2, with three segments in abutting end-to-end relationship: a mouth end segment 12, distant from the tobacco rod 2; a flavour release segment 24 located upstream of the mouth end segment 12; and a rod end segment 16, located upstream of the flavour release segment 24 and adjacent to and abutting the wrapped tobacco rod 2. The mouth end segment 12 and the rod end segment 16 are of the same construction as those previously described for the filter cigarette 20 shown in Figure 2. The flavour release segment 24 comprises a cavity containing a plurality of flavour granules.

To form the filter cigarettes 10, 20, 30 according to the embodiments of the present invention shown in Figures 1 to 3, the filters 4 are produced and then joined to the wrapped tobacco rods 2, which are produced in a conventional manner, by the tipping paper 6 using known filter cigarette making equipment.

To produce the multi-component filters 4 of the filter cigarettes 20, 30 shown in Figures 2 and 3, separate continuous rods comprising multiple units of each segment 12, 14, 24, 16 of the multi-component filter 4 are produced in a known manner and then combined to form a continuous filter rod comprising multiple units of the multi-component filter 4. The continuous filter rod is then severed at regular intervals by a cutting mechanism to yield a succession of discrete multi-component filters.

The following example describes a method for producing flavour granules for use in the flavour segment of filters according to the present invention, including any of the embodiments described above:

### Example

Flavour granules are formed from an agglomerate of the components shown below in Table 1 in the amounts indicated in the column headed 'Amount before drying (g)'.

To produce the flavour granules, the activated carbon and the menthol solution are first mixed together to form a menthol-flavoured activated carbon. The menthol flavoured activated carbon is then mixed with the ground peppermint leaf, the Avicel PH101® and the water to form a homogeneous paste, which is then extruded to form strands having an average diameter of 1 mm. As described above, the strands are spheronised on a cylindrical plate to form spheres having an average diameter of about 0.8 mm and then dried to remove the majority of the water and the ethanol from the menthol solution.

**TABLE 1**

| **Component** | **Function** | **Amount (g) before drying** | **Amount (g) after drying** | **% by weight after drying** |
|---|---|---|---|---|
| Activated carbon | Porous support material | 25.0 | 25.0 | 23.3% |
| Menthol solution (menthol 85%; ethanol 15%) | Liquid flavourant | 25.0 | 22.4 | 20.8% |
| Avicel PH101® (microcrystalline cellulose) | Organic binder | 25.0 | 25.0 | 23.3% |
| Ground peppermint leaf (*Mentha piperita*) | Plant material | 25.0 | 25.0 | 23.3% |
| Water | Inorganic binder | 103.2 | 10.0 | 9.3% |
| **TOTAL** | | **203.2** | **107.4** | **100%** |

| | | | | |
|---|---|---|---|---|
| Avicel PH 101® is available from Sigma Aldrich. | | | | |

## Claims

1. A flavour granule for a smoking article, the flavour granule comprising:
a porous support material;
a liquid flavourant;
particles of plant material; and
at least one binder.

2. A filter (4) for a smoking article (10, 20, 30) comprising a flavour release segment (14) including a plurality of flavour granules according to claim 1.

3. A filter according to claim 2 wherein the plant material comprises herb leaf, preferably peppermint leaf.

4. A filter according to claim 2 or 3 wherein the liquid flavourant comprises at least one of:
an essential oil; and
natural or synthetic menthol.

5. A filter according to any of claims 2 to 4 wherein the flavour granules comprise at least 20 % by weight liquid flavourant.

6. A filter according to any of claims 2 to 5 wherein the porous support material is activated carbon.

7. A filter according to any of claims 2 to 6 wherein the flavour granules further comprise a coating.

8. A filter according to any of claims 2 to 7 wherein the flavour release segment includes a plug of fibrous filtration material in which the flavour granules are distributed and the fibrous filtration material comprises fibres that are substantially aligned in the longitudinal direction of the filter and that extend along substantially the entire length of the plug of fibrous filtration material.

9. A filter according to any of claims 2 to 7 wherein the flavour release segment includes a plug of fibrous filtration material in which the flavour granules are distributed and the plug of fibrous filtration material comprises randomly oriented fibres that extend part way along the length of the plug of fibrous filtration material.

10. A filter (4) according to any of claims 2 to 9 further comprising at least one of:
a mouth end segment (12) downstream of the flavour release segment (14, 24); and
a rod end segment (16) upstream of the flavour release segment (14, 24).

11. A filter according to claim 10 wherein one or both of the mouth end segment and the rod end segment comprise an additional liquid flavourant.

12. A filter (4) according to any of claims 2 to 11 wherein the flavour release segment (24) includes a cavity at least partially filled with the flavour granules.

13. A smoking article (10, 20, 30) comprising:
a wrapped rod of smokable material (2); and
a filter (4) according to any of claims 2 to 12 attached to the wrapped rod of smokable material (2) by tipping paper (6).

14. A smoking article comprising a plurality of flavour granules according to claim 1.

15. A smoking article according to claim 14 further comprising a rod of smokable material wherein the flavour granules are dispersed within the rod of smokable material.

## Patentansprüche

1. Geschmacksstoffkörnchen für einen Raucherartikel, wobei das Geschmacksstoffkörnchen Folgendes umfasst:
ein poröses Trägermaterial,
einen flüssigen Geschmacksstoff,
Teilchen von Pflanzenmaterial und
wenigstens ein Bindemittel.

2. Filter (4) für einen Raucherartikel (10, 20, 30), der ein Geschmacksfreisetzungsmittel (14) mit einer Vielzahl von Geschmacksstoffkörnchen nach Anspruch 1 aufweist.

3. Filter nach Anspruch 2, wobei das Pflanzenmaterial Kräuterblatt, vorzugsweise Pfefferminzblatt, aufweist.

4. Filter nach Anspruch 2 oder 3, wobei der flüssige Geschmacksstoff wenigstens eines der Folgenden aufweist:
ein ätherisches Öl und
natürliches oder synthetisches Menthol.

5. Filter nach einem der Ansprüche 2 bis 4, wobei die Geschmacksstoffkörnchen wenigstens 20 Gewichtsprozent flüssigen Geschmacksstoff umfassen.

6. Filter nach einem der Ansprüche 2 bis 5, wobei das poröse Trägermaterial Aktivkohle ist.

7. Filter nach einem der Ansprüche 2 bis 6, wobei die Geschmacksstoffkörnchen ferner einen Überzug aufweisen.

8. Filter nach einem der Ansprüche 2 bis 7, wobei das Geschmacksfreisetzungssegment einen Einsatz aus faserigem Filtermaterial beinhaltet, in dem die Geschmacksstoffkörnchen verteilt sind, und das faserige Filtermatial Fasern umfasst, die im Wesentlichen in der Längsrichtung des Filters ausgerichtet sind und sich im Wesentlichen an der gesamten Länge des Einsatzes aus faserigem Filtermaterial entlang erstrecken.

9. Filter nach einem der Ansprüche 2 bis 7, wobei das Geschmacksfreisetzungssegment einen Einsatz aus faserigem Filtermaterial beinhaltet, in dem die Geschmacksstoffkörnchen verteilt sind, und der Einsatz aus faserigem Filtermaterial wahllos ausgerichtete Fasern umfasst, die sich ein Stückweit an der Länge des Einsatzes aus faserigem Filtermaterial entlang erstrecken.

10. Filter (4) nach einem der Ansprüche 2 bis 9, der ferner wenigstens eines der Folgenden aufweist:
ein mundseitiges Segment (12) abströmseitig des Geschmacksfreisetzungssegments (14, 24) und
ein stabseitiges Segment (16) zuströmseitig des Geschmacksfreisetzungssegments (14, 24).

11. Filter nach Anspruch 10, wobei das mundseitige Segment und/oder das stabseitige Segment einen zusätzlichen flüssigen Geschmacksstoff aufweisen.

12. Filter (4) nach einem der Ansprüche 2 bis 11, wobei das Geschmacksstofffreisetzungssegment (24) einen Hohlraum beinhaltet, der wenigstens teilweise mit den Geschmacksstoffkörnchen gefüllt ist.

13. Raucherartikel (10, 20, 30), umfassend:
einen umhüllten Stab aus rauchbarem Material (2) und
einen Filter (4) nach einem der Ansprüche 2 bis 12, der mit Belagpapier (6) an dem umhüllten Stab aus rauchbarem Material (2) angebracht ist.

14. Raucherartikel, der eine Vielzahl von Geschmacksstoffkörnchen nach Anspruch 1 aufweist.

15. Raucherartikel nach Anspruch 14, der ferner einen Stab aus rauchbarem Material aufweist, wobei die Geschmacksstoffkörnchen in dem Stab aus rauchbarem Material verteilt sind.

## Revendications

1. Granulé aromatique pour article pour fumeur, le granulé aromatique comprenant :
une substance de support poreuse ;
un aromatisant liquide ;
des particules de substance végétale ; et
au moins un liant.

2. Filtre (4) pour article pour fumeur (10, 20, 30) comprenant un segment de libération d'arôme (14) comportant une pluralité de granulés aromatiques selon la revendication 1.

3. Filtre selon la revendication 2, dans lequel la substance végétale comprend des feuilles d'herbe, de préférence des feuilles de menthe poivrée.

4. Filtre selon la revendication 2 ou 3, dans lequel l'aromatisant liquide comprend au moins l'un :
d'une huile essentielle ; et
d'un menthol naturel ou synthétique.

5. Filtre selon l'une quelconque des revendications 2 à 4, dans lequel les granulés aromatiques comprennent au moins 20% en poids d'aromatisant liquide.

6. Filtre selon l'une quelconque des revendications 2 à 5, dans lequel la substance de support poreuse est du charbon actif.

7. Filtre selon l'une quelconque des revendications 2 à 6, dans lequel les granulés aromatiques comprennent en outre un enrobage.

8. Filtre selon l'une quelconque des revendications 2 à 7, dans lequel le segment de libération d'arôme comporte un bout-filtre de substance de filtration fibreuse dans lequel les granulés aromatiques sont distribués et la substance de filtration fibreuse comprend des fibres qui sont sensiblement alignées dans le sens longitudinal du filtre et qui s'étendent le long de sensiblement toute la longueur du bout-filtre de substance de filtration fibreuse.

9. Filtre selon l'une quelconque des revendications 2 à 7, dans lequel le segment de libération d'arôme comporte un bout-filtre de substance de filtration fibreuse dans lequel les granulés aromatiques sont distribués et le bout-filtre de substance de filtration fibreuse comprend des fibres orientées de manière aléatoire qui s'étendent en partie le long de la longueur du bâtonnet de substance de filtration fibreuse.

10. Filtre (4) selon l'une quelconque des revendications 2 à 9, comprenant en outre au moins l'un :
d'un segment d'embout buccal (12) en aval du segment de libération d'arôme (14, 24) ; et
d'un segment d'extrémité de bâtonnet (16) en amont du segment de libération d'arôme (14, 24).

11. Filtre selon la revendication 10, dans lequel l'un du segment d'embout buccal et du segment d'extrémité de bâtonnet ou les deux comprennent un aromatisant liquide supplémentaire.

12. Filtre selon l'une quelconque des revendications 2 à 11, dans lequel le segment de libération d'arôme (24) comporte une cavité remplie au moins partiellement des granulés aromatiques.

13. Article pour fumeur (10, 20, 30), comprenant :
un bâtonnet enveloppé d'une substance fumable (2) ; et
un filtre (4) selon l'une quelconque des revendications 2 à 12, attaché au bâtonnet enveloppé de substance fumable (2) par un papier de manchette (6).

14. Article pour fumeur comprenant une pluralité de granulés aromatiques selon la revendication 1.

15. Article pour fumeur selon la revendication 14, comprenant en outre un bâtonnet de substance fumable dans lequel les granulés aromatiques sont dispersés dans le bâtonnet de substance fumable.
